(19) Europäisches Patentamt
European Patent Office
Office européen des brevets

(11) **EP 3 495 665 A1**

(12) **EUROPEAN PATENT APPLICATION**

(43) Date of publication:
**12.06.2019 Bulletin 2019/24**

(51) Int Cl.:
*F04D 27/02* (2006.01)   *F02B 37/22* (2006.01)
*F04D 29/46* (2006.01)   *F16K 3/03* (2006.01)
*F02B 37/12* (2006.01)

(21) Application number: **18210489.3**

(22) Date of filing: **05.12.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **08.12.2017   US 201715836781**

(71) Applicant: **Garrett Transportation I Inc.**
**Torrance, CA 90504 (US)**

(72) Inventors:
• **Smith, William Joseph**
**Torrance, CA 90504 (US)**
• **Mohtar, Hani**
**Torrance, CA 90504 (US)**
• **Pees, Stephane**
**Torrance, CA 90504 (US)**

(74) Representative: **LKGLOBAL**
**Lorenz & Kopf PartG mbB Patentanwälte**
**Brienner Straße 11**
**80333 München (DE)**

(54) **ADJUSTABLE-TRIM CENTRIFUGAL COMPRESSOR FOR A TURBOCHARGER**

(57)    A centrifugal compressor for a turbocharger includes an inlet-adjustment mechanism in an air inlet for the compressor, operable to move between an open position and a closed position in the air inlet. The inlet-adjustment mechanism includes a plurality of blades disposed about the air inlet and collectively circumscribing an orifice, the blades being movable inwardly through a slot in the air inlet wall so as to adjust the size of the orifice. Compressor performance is optimized through selection of inlet-adjustment mechanism parameters including the minimum orifice area when closed $AR_c$, spacing distance $L$ between the minimum-area point and the compressor wheel leading edge, blade shape, and orifice shape.

FIG. 8

Printed by Jouve, 75001 PARIS (FR)

## Description

BACKGROUND OF THE INVENTION

The present disclosure relates to centrifugal compressors, such as used in turbochargers, and more particularly relates to centrifugal compressors in which the effective inlet area or diameter can be adjusted for different operating conditions.

An exhaust gas-driven turbocharger is a device used in conjunction with an internal combustion engine for increasing the power output of the engine by compressing the air that is delivered to the air intake of the engine to be mixed with fuel and burned in the engine. A turbocharger comprises a compressor wheel mounted on one end of a shaft in a compressor housing and a turbine wheel mounted on the other end of the shaft in a turbine housing. Typically the turbine housing is formed separately from the compressor housing, and there is yet another center housing connected between the turbine and compressor housings for containing bearings for the shaft. The turbine housing defines a generally annular chamber that surrounds the turbine wheel and that receives exhaust gas from an engine. The turbine assembly includes a nozzle that leads from the chamber into the turbine wheel. The exhaust gas flows from the chamber through the nozzle to the turbine wheel and the turbine wheel is driven by the exhaust gas. The turbine thus extracts power from the exhaust gas and drives the compressor. The compressor receives ambient air through an inlet of the compressor housing and the air is compressed by the compressor wheel and is then discharged from the housing to the engine air intake.

Turbochargers typically employ a compressor wheel of the centrifugal (also known as "radial") type because centrifugal compressors can achieve relatively high pressure ratios in a compact arrangement. Intake air for the compressor is received in a generally axial direction at an inducer portion of the centrifugal compressor wheel and is discharged in a generally radial direction at an exducer portion of the wheel. The compressed air from the wheel is delivered to a volute, and from the volute the air is supplied to the intake of an internal combustion engine.

The operating range of the compressor is an important aspect of the overall performance of the turbocharger. The operating range is generally delimited by a surge line and a choke line on an operating map for the compressor. The compressor map is typically presented as pressure ratio (discharge pressure *Pout* divided by inlet pressure *Pin*) on the vertical axis, versus corrected mass flow rate on the horizontal axis. The choke line on the compressor map is located at high flow rates and represents the locus of maximum mass-flow-rate points over a range of pressure ratios; that is, for a given point on the choke line, it is not possible to increase the flow rate while maintaining the same pressure ratio because a choked-flow condition occurs in the compressor.

The surge line is located at low flow rates and represents the locus of minimum mass-flow-rate points without surge, over a range of pressure ratios; that is, for a given point on the surge line, reducing the flow rate without changing the pressure ratio, or increasing the pressure ratio without changing the flow rate, would lead to surge occurring. Surge is a flow instability that typically occurs when the compressor blade incidence angles become so large that substantial flow separation arises on the compressor blades. Pressure fluctuation and flow reversal can happen during surge.

In a turbocharger for an internal combustion engine, compressor surge may occur when the engine is operating at high load or torque and low engine speed, or when the engine is operating at a low speed and there is a high level of exhaust gas recirculation (EGR). Surge can also arise when an engine is suddenly decelerated from a high-speed condition. Expanding the surge-free operation range of a compressor to lower flow rates is a goal often sought in compressor design.

Applicant is owner of a number of pending patent applications directed to a turbocharger compressor having an inlet-adjustment mechanism for adjusting the size of the inlet flow area into the compressor, such as U.S. Patent Applicant Serial No. 15/446,054 filed on March 1, 2017, which claims the benefit of the filing date of U.S. Provisional Patent Application Serial No. 62/324,488 filed on April 19, 2017, the entire disclosures of said applications being hereby incorporated herein by reference. The inlet-adjustment mechanisms described in said applications are effective for shifting the compressor surge line to lower flow rates.

BRIEF SUMMARY OF THE DISCLOSURE

The present disclosure describes mechanisms and methods for a centrifugal compressor that can enable the surge line for the compressor to selectively be shifted to the left (i.e., surge is delayed to a lower flow rate at a given pressure ratio) while optimizing compressor performance. One embodiment described herein comprises a turbocharger having the following features:

a turbine housing and a turbine wheel mounted in the turbine housing and connected to a rotatable shaft for rotation therewith, the turbine housing receiving exhaust gas and supplying the exhaust gas to the turbine wheel;

a centrifugal compressor assembly comprising a compressor housing and a compressor wheel mounted in the compressor housing and connected to the rotatable shaft for rotation therewith, the compressor wheel having blades and defining an inducer portion and an exducer portion, the compressor housing having an air inlet wall defining an air inlet for leading air generally axially into the compressor wheel, the air inlet at the inducer portion having a diameter $F$, the compressor housing further defining a diffuser receiving compressed air from the exducer portion and diffusing and delivering the compressed air into a volute defined by the compressor housing, the exducer portion having a diameter $D$; and

a compressor inlet-adjustment mechanism disposed in the air inlet of the compressor housing and adjustable between an open position and a closed position, the inlet-adjustment mechanism comprising a plurality of blades disposed about the air inlet, the blades collectively circumscribing an orifice delimited by the blades, the blades being movable radially inwardly through a slot in the air inlet wall so as to adjust a flow area $AR$ circumscribed by the orifice, wherein $AR_c$ denotes the minimum value of $AR$ when the inlet-adjustment mechanism is adjusted to the closed position;

wherein $L$ is an axial distance between a leading edge of the inducer portion and a location where the flow area $AR$ of the orifice is a minimum,

wherein the inlet-adjustment mechanism is configured such that $0.28*\pi*(F/2)2 < AR_c < 0.95*\pi*(F/2)2$, and

wherein $L \leq 0.4*D$.

In accordance with one embodiment, $L \geq G$, where $G$ is an axial clearance between the exducer portion of the compressor wheel and the compressor housing.

In one embodiment of the invention, each of the blades has an arcuate shape. Each of the blades is pivotable about a pivot pin, and the blades are engaged with a rotatable unison ring that surrounds the orifice, rotation of the unison ring in one direction about an axis thereof causing the blades to pivot to the closed position of the inlet-adjustment mechanism, rotation of the unison ring in an opposite direction causing the blades to pivot to the open position.

In accordance with one embodiment, the orifice in the closed position of the inlet-adjustment mechanism is circular.

In accordance with another embodiment, the orifice in the closed position of the inlet-adjustment mechanism is non-circular. For example, the orifice in the closed position of the inlet-adjustment mechanism can be elliptical.

BRIEF DESCRIPTION OF THE SEVERAL VIEWS OF THE DRAWING(S)

Having thus described the invention in general terms, reference will now be made to the accompanying drawings, which are not necessarily drawn to scale, and wherein:

FIG. 1 is an end view of a turbocharger in accordance with one embodiment of the invention, looking axially from the compressor end toward the turbine end of the turbocharger;

FIG. 2 is a cross-sectional view of the turbocharger along line 2-2 in FIG. 1;

FIG. 3 is a perspective view of the compressor portion of the turbocharger of FIG. 1;

FIG. 4 is a partially exploded view of the compressor portion of FIG. 3;

FIG. 5 is a perspective view of an inlet-adjustment mechanism for the compressor, with the top plate of the inlet-adjustment mechanism removed to show details of the blades, illustrating a closed position of the inlet-adjustment mechanism;

FIG. 6 is a side view of the inlet-adjustment mechanism;

FIG. 7 is a cross-sectional view through the inlet-adjustment mechanism along line 7-7 in FIG. 6, showing the inlet-adjustment mechanism in an open position;

FIG. 8 is a view similar to FIG. 7, with the inlet-adjustment mechanism in an intermediate position;

FIG. 9 is a view similar to FIG. 7, with the inlet-adjustment mechanism in a closed position;

FIG. 10 is an axial cross-sectional view of a compressor in accordance with an embodiment of the invention, illustrating several key parameters of the inlet-adjustment mechanism of significance to optimum performance of the compressor;

FIG. 11 is an end view of a turbocharger in accordance with a further embodiment of the invention, looking axially from the compressor end toward the turbine end of the turbocharger; and

FIG. 12 is an end view of the compressor inlet of the turbocharger of FIG. 10, illustrating a non-circular orifice of the inlet-adjustment mechanism.

DETAILED DESCRIPTION OF THE DRAWINGS

The present inventions now will be described more fully hereinafter with reference to the accompanying drawings, in which some but not all embodiments of the inventions are shown. Indeed, these inventions may be embodied in many different forms and should not be construed as limited to the embodiments set forth herein; rather, these embodiments are provided so that this disclosure will satisfy applicable legal requirements. Like numbers refer to like elements throughout.

In the present disclosure, the term "orifice" means "opening" without regard to the shape of the opening. Thus, an "orifice" can be circular or non-circular. Additionally, when the blades of the inlet-adjustment mechanism are described as moving "radially" inwardly or outwardly, the term "radially" does not preclude some non-radial component of movement of the blades (for example, the blades may occupy a plane that is angled slightly with respect to the rotational axis of the compressor, such that when the blades move radially inwardly and outwardly, they also move with a small axial component of motion).

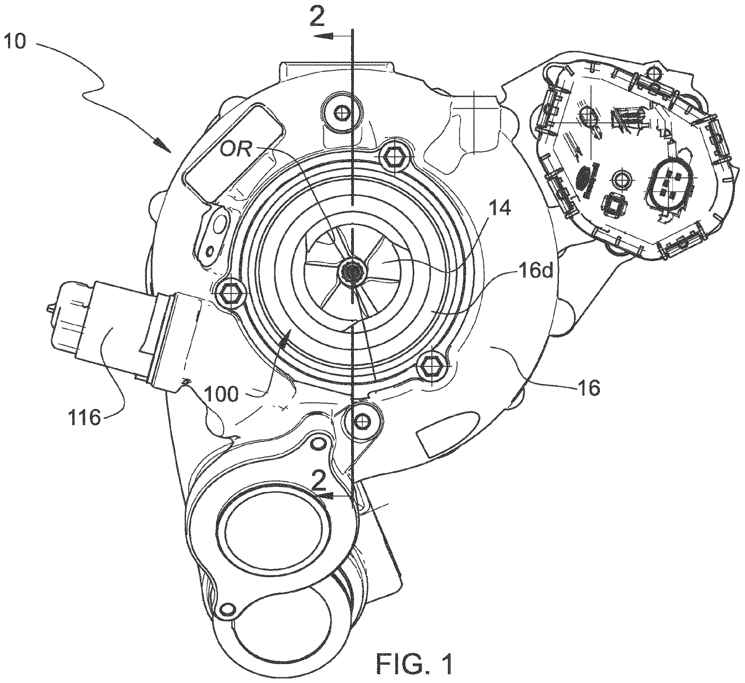

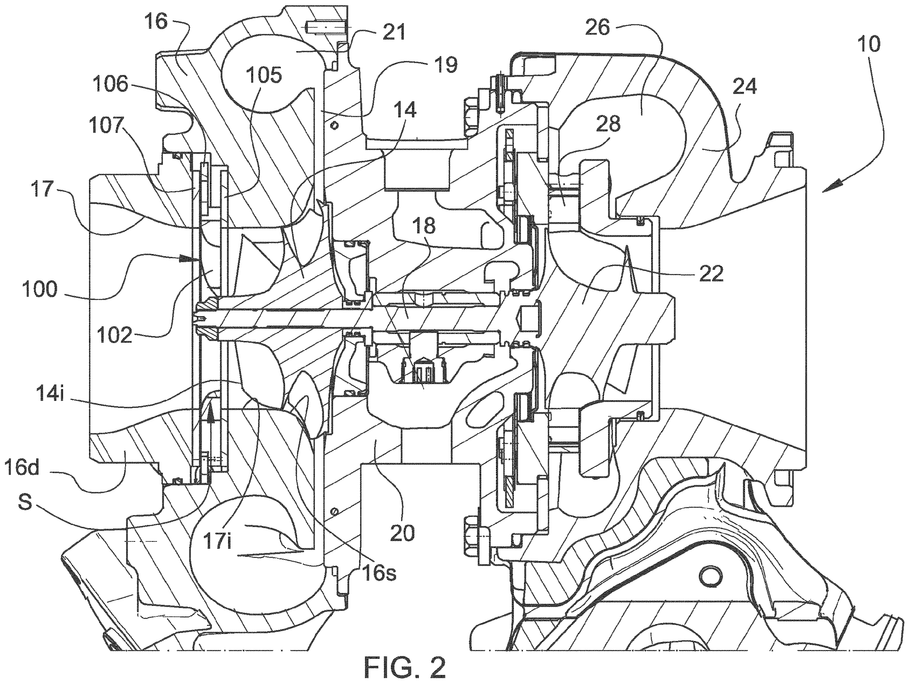

A turbocharger **10** in accordance with one embodiment of the invention is illustrated in axial end view in FIG. 1, and an axial cross-sectional view of the turbocharger is shown in FIG. 2. The turbocharger includes a compressor and a turbine. The compressor comprises a compressor wheel or impeller **14** mounted in a compressor housing **16** on one end of a rotatable shaft **18**. The compressor housing includes a wall that defines an air inlet **17** for leading air generally axially into the compressor wheel **14**. The shaft is supported in bearings mounted in a center housing **20** of the turbocharger. The shaft is rotated by a turbine wheel **22** mounted on the other end of the shaft from the compressor wheel, thereby rotatably driving the compressor wheel, which compresses air drawn in through the compressor inlet and discharges the compressed air generally radially outwardly from an exducer portion **14e** of the compressor wheel. The compressed air travels through a diffuser **19** into a volute **21** for receiving the compressed air. From the volute **21,** the air is routed to the intake of an internal combustion engine (not shown) for boosting the performance of the engine.

The turbine wheel **22** is disposed within a turbine housing **24** that defines an annular chamber **26** for receiving exhaust gases from an internal combustion engine (not shown). The turbine housing also defines a nozzle **28** for directing exhaust gases from the chamber **26** generally radially inwardly to the turbine wheel **22**. The exhaust gases are expanded as they pass through the turbine wheel, and rotatably drive the turbine wheel, which in turn rotatably drives the compressor wheel **14** as already noted.

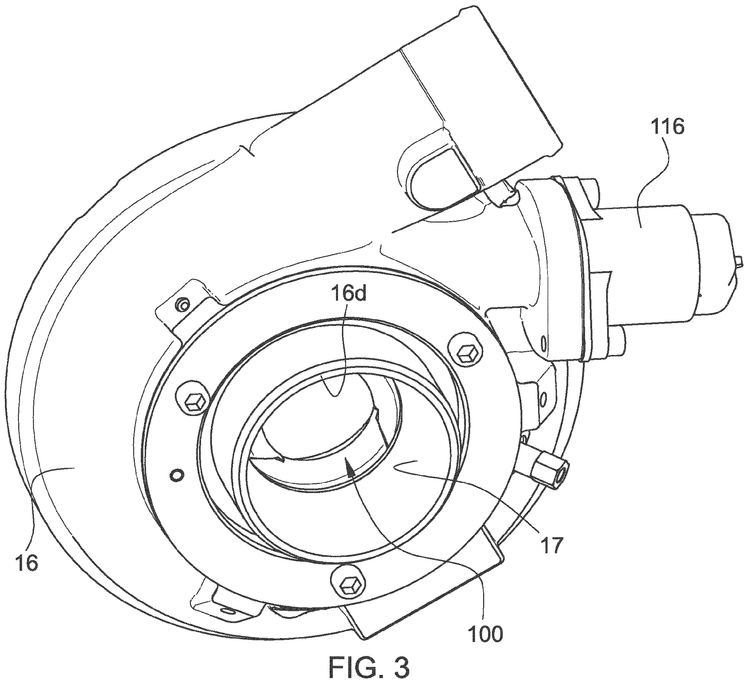

With reference to FIGS. 1-4, in the illustrated embodiment, the wall that defines the air inlet **17** is formed in part by the compressor housing **16** and in part by a separate inlet duct member **16d** that is received into a cylindrical receptacle defined by the compressor housing. The portion of the air inlet **17** proximate the compressor wheel **14** defines a generally cylindrical inner surface **17i** that has a diameter generally matched to the diameter of an inducer portion **14i** of the compressor wheel.

The compressor housing **16** defines a shroud surface **16s** that is closely adjacent to the radially outer tips of the compressor blades. The shroud surface defines a curved contour that is generally parallel to the contour of the compressor wheel.

In accordance with the invention, the compressor of the turbocharger includes an inlet-adjustment mechanism **100** disposed in the air inlet **17** of the compressor housing. The inlet-adjustment mechanism comprises a ring-shaped assembly and is disposed in an annular space defined between the compressor housing **16** and the separate inlet duct member **16d**. The inlet-adjustment mechanism is operable for adjusting an effective diameter of the air inlet into the compressor wheel. As such, the inlet-adjustment mechanism is movable between an open position and a closed position, and can be configured to be adjusted to various points intermediate between said positions.

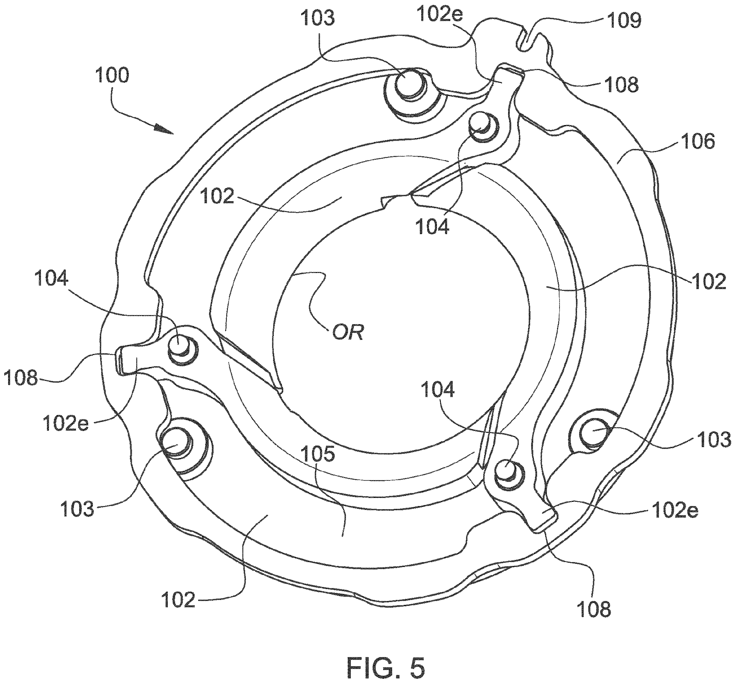

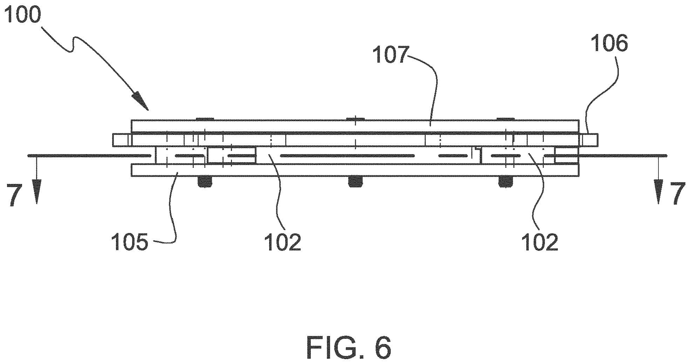

With reference now to FIGS. 5 and 6, the inlet-adjustment mechanism comprises a plurality of blades **102** arranged about the central axis of the air inlet and each pivotable about a pivot pin **104** located at or near one end of the blade. In the illustrated embodiment, the inlet-adjustment mechanism comprises a stand-alone assembly or "cartridge" having a pair of annular end plates **105** and **107**. The pivot pins are secured in the annular end plate **105** and the blades are arranged to rest against the end plate. The assembly of the blades **102** and unison ring **106** is captively retained between the annular end plate **105** and the second opposite annular end plate **107**. The pivot pins **104** can also serve the further function of axially spacing the two end plates apart from each other. A plurality of guides **103** are also secured in the end plate **105,** or optionally can be secured in the other end plate **107** instead, or can be secured to both end plates. The guides are located so as to engage the circular inner periphery of a unison ring **106** that is substantially coplanar with the blades **102**. (Optionally the guides **103** can engage the outer periphery of the unison ring if the end plate diameter is large enough to support the guides radially outward of the unison ring.) The guides **103** serve to guide the unison ring when it is rotated about its central axis (which coincides with the rotational axis of the turbocharger), so that the unison ring remains substantially concentric with respect to the end plate **105**. The guides **103** can comprise rollers or fixed guide pins. The inner periphery of the unison ring defines a plurality of slots **108,** equal in number to the number of blades **102**. Each blade includes an end portion **102e** that engages one of the slots **108,** so that when the unison ring is rotated about its axis, the blades are pivoted about the pivot pins **104**.

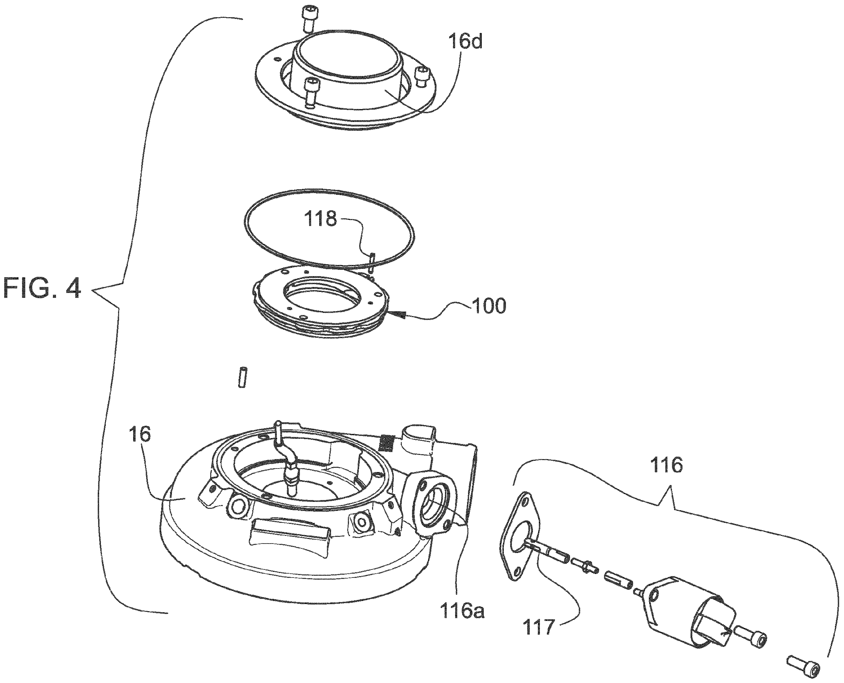

As shown in FIGS. 2 and 4, the entire assembly is disposed in an annular space defined between the compressor housing **16** and the inlet duct member **16d.** The two end plates **105** and **107** have an inner diameter matched to the diameter of the cylindrical inlet surface **17i** proximate the inducer **14i** of the compressor wheel, such that the two end plates are effectively part of the wall defining the air inlet **17,** and such that the axial space between the two end plates effectively forms an opening or slot **S** (FIG. 2) through the wall of the air inlet. The blades **102** are arranged to pass through this slot. The radially inner edges of the blades **102** include portions that preferably are generally circular arc-shaped and these edges collectively surround and bound a generally circular opening (although the degree of roundness varies depending on the positions of the blades, as further described below).

In an alternative embodiment (not shown), instead of a cartridge form of inlet-adjustment mechanism, the inlet-adjustment mechanism can comprise a non-cartridge assembly in which the pins **104** for the blades **102** are secured in the compressor housing **16** and/or the inlet duct member **16d.** Stated differently, the end plate **105** becomes an integral portion of the compressor housing **16** and the other end plate **107** becomes an integral portion of the inlet duct member **16d.**

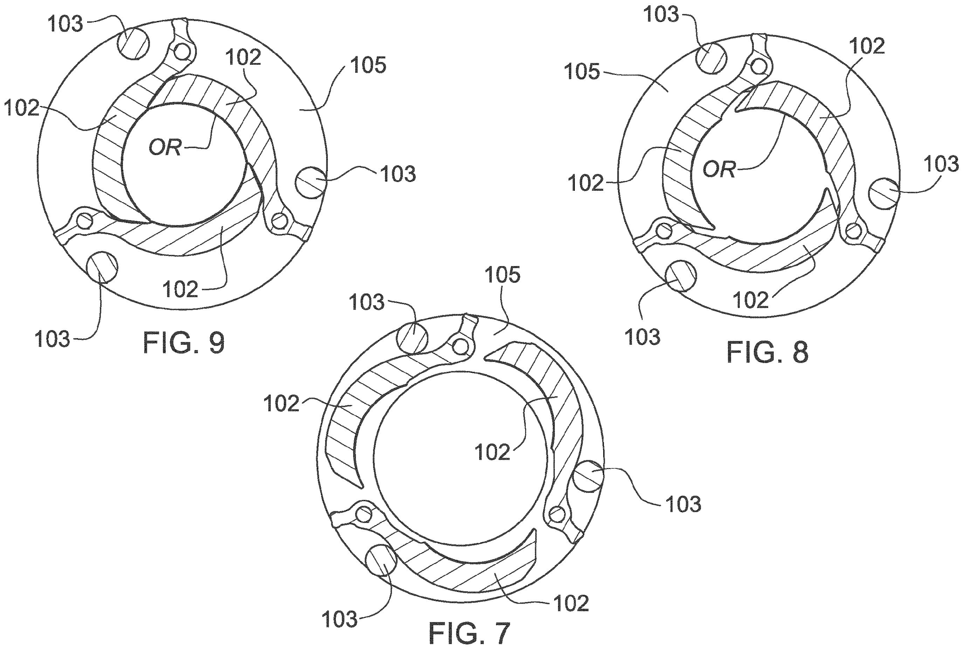

The range of pivotal movement of the blades is sufficient that the blades can be pivoted radially outwardly (by rotation of the unison ring in one direction, clockwise in FIG. 5) to an open position as shown in FIG. 7, in which the blades are entirely radially outward of the inner surface **17i** of the inlet. As such, in the open position of the blades, the inlet-adjustment mechanism does not alter the nominal inlet diameter as defined by the inlet surface **17i.** Optionally, the guides **103** can serve also as stops for limiting the radially outward pivoting of the blades to the open position.

The blades can also be pivoted radially inwardly (by rotation of the unison ring in the opposite direction, counterclockwise in FIG. 5) to an intermediate position as shown in FIG. 8. In the intermediate position, the circular-arc edges along the radially inner sides of the blades collectively form an orifice *OR* having a diameter that is less than that of the inlet surface **17i.** This has the consequence that the effective diameter of the inlet is reduced relative to the nominal inlet diameter. Furthermore, the blades can be pivoted an additional amount to a closed position as shown in FIG. 9. When the blades are in the closed position, the circular-arc edges of the blades collectively define an opening or orifice *OR* that is still smaller than the opening for the intermediate position of FIG. 8. Thus, the inlet-adjustment mechanism causes the effective diameter of the inlet to be further reduced relative to the intermediate position. In this manner, the inlet-adjustment mechanism is able to regulate the effective diameter of the air inlet approaching the compressor wheel.

As previously described, the blades **102** are actuated to pivot between their open and closed positions by the unison ring **106** that is rotatable about the center axis of the air inlet. Referring now to FIG. 4, rotational motion is imparted to the unison ring by an actuator **116** that is received into a receptacle **116a** defined in the compressor housing. The actuator includes an actuator rod **117** that extends through a space defined in the compressor housing and is affixed at its distal end to a pin **118** that engages a slot **109** in the outer periphery of the unison ring **106**. The actuator is operable to extend and retract the rod **117** linearly along its length direction so as to rotate the unison ring **106** and thereby actuate the blades **102**. Extending the rod pivots the blades towards the closed position and retracting the rod pivots the blades toward the open position.

As noted, the inlet-adjustment mechanism **100** enables adjustment of the effective size or diameter of the inlet into the compressor wheel **14**. As illustrated in FIG. 2, when the inlet-adjustment mechanism is in the closed position, the effective diameter of the inlet into the compressor wheel is dictated by the inside diameter defined by the blades **102**. In order for this effect to be achieved, the axial spacing distance between the blades and the compressor wheel must be as small as practicable, so that there is insufficient distance downstream of the blades for the flow to expand to the full diameter of the inducer portion of the compressor wheel **14** by the time the air encounters it. The inlet diameter is thereby effectively reduced to a value that is dictated by the blades.

At low flow rates (e.g., low engine speeds), the inlet-adjustment mechanism **100** can be placed in the intermediate or closed position of FIG. 8 or FIG. 9. This can have the effect of reducing the effective inlet diameter and thus of increasing the flow velocity into the compressor wheel. The result will be a reduction in compressor blade incidence angles, effectively stabilizing the flow (i.e., making blade stall and compressor surge less likely). In other words, the surge line of the compressor will be moved to lower flow rates (to the left on a map of compressor pressure ratio versus flow rate).

At intermediate and high flow rates, the inlet-adjustment mechanism **100** can be opened as in FIG. 7. This can have the effect of increasing the effective inlet diameter so that the compressor regains its high-flow performance and choke flow essentially as if the inlet-adjustment mechanism were not present and as if the compressor had a conventional inlet matched to the wheel diameter at the inducer portion of the wheel.

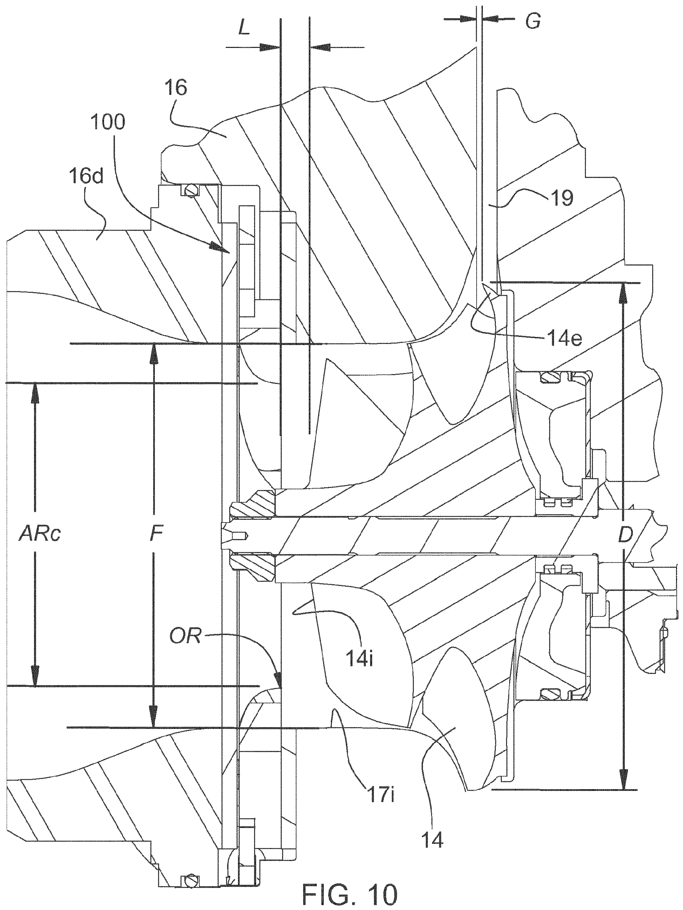

In accordance with the present invention, performance of the compressor can be optimized through selection of certain geometric characteristics or parameters of the inlet-adjustment mechanism **100.** With reference to FIG. 10, a compressor in accordance with an embodiment of the invention is depicted. FIG. 10 is an enlargement of a portion of FIG. 2, and hence the previous description of the compressor in FIG. 2 applies equally to FIG. 10. However, FIG. 10 includes additional reference characters for explaining how compressor performance is optimized in accordance with the invention. The reference character *F* denotes the diameter of the air inlet to the compressor at the location of the inducer **14i,** or in other words, the diameter of the inlet surface **17i** at the inducer. Stated differently, *F* is the sum of the diameter of the inducer **14i** and two times the radial clearance between the inducer and the inlet surface **17i.** The reference character $AR_c$ denotes the flow area bounded by the orifice *OR* of the inlet-adjustment mechanism **100** when it is closed as in FIG. 10. The reference character **L** is the axial spacing between the leading edge of the compressor inducer **14i** and the axial location where the orifice **OR** of the inlet-adjustment mechanism is defined (i.e., the axial location where the flow area through the inlet-adjustment mechanism is a minimum). The reference character **D** is the diameter of the exducer **14e** of the compressor wheel. The reference character **G** is the axial clearance between the exducer **14e** and the compressor housing (i.e., the upstream wall of the diffuser **19**).

In accordance with the invention, performance of the compressor can be optimized by ensuring that the orifice flow area when the inlet-adjustment mechanism is closed, $AR_c$, is greater than 28% of the flow area of the air inlet at the compressor inducer inlet **17i**. A practical maximum upper limit on $AR_c$ is 95% of the inducer inlet flow area. Thus,

$$0.28 * \pi * (F/2)^2 < AR_c < 0.95 * \pi * (F/2)^2.$$

More preferably, the upper limit on $AR_c$ is 90% of the inducer inlet flow area, and still more preferably 85% of the inducer inlet flow area.

Furthermore, in accordance with the invention, the axial spacing **L** between the orifice minimum area location (where $AR$ is defined) and the leading edge of the compressor wheel inducer is not greater than 40% of the compressor exducer diameter **D,** or

$$L \leq 0.4 * D.$$

The axial spacing **L** preferably is not less than the exducer-compressor housing clearance **G,** or

$$L \geq G.$$

Accordingly, $G \leq L \leq 0.4 * D.$

Preferably, **L** can be in a range between 5% and 35% of exducer diameter **D,** more preferably between 5% and 30% of **D,** and still more preferably between 5% and 25% of **D,** even more preferably between 5% and 20% of **D,** and most preferably between 5% and 15% of **D.**

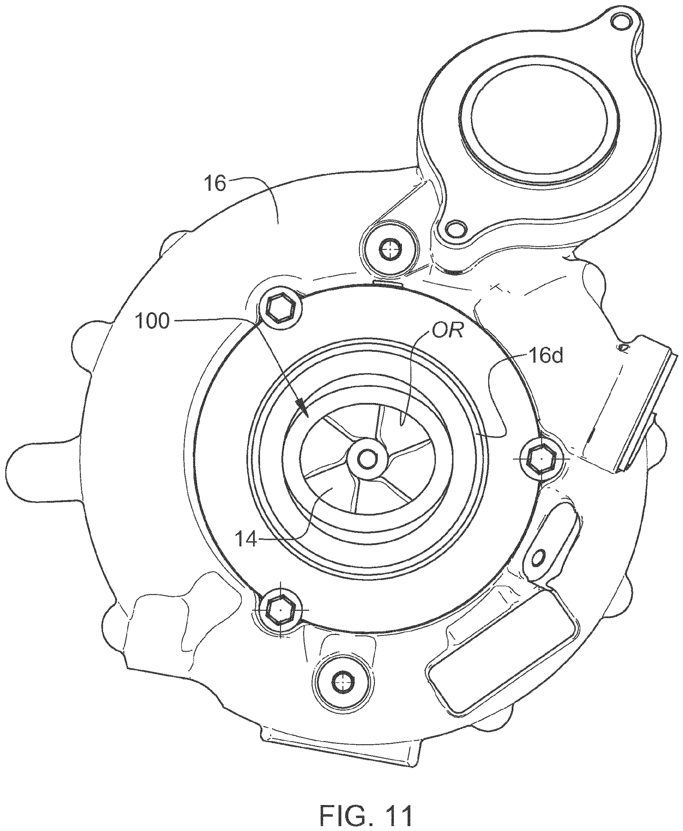

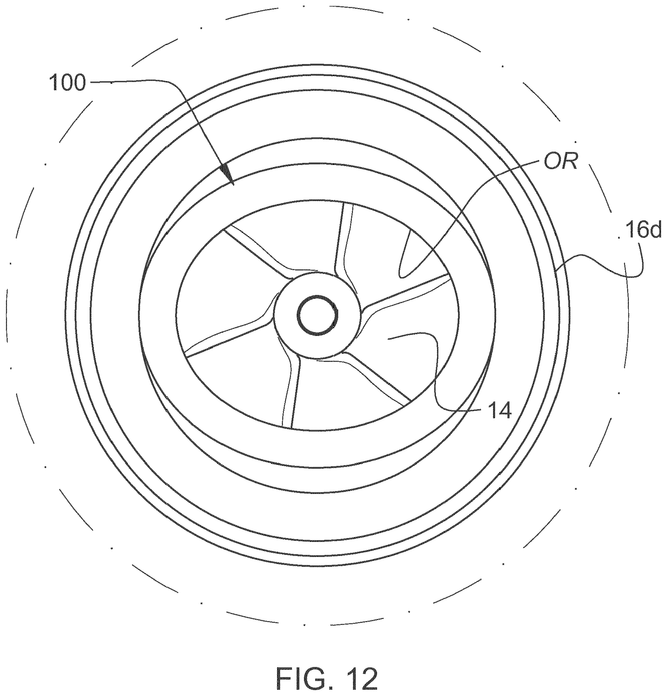

With reference to FIGS. 11 and 12, a further embodiment of the invention is depicted, in which the shape of the orifice **OR** defined by the inlet-adjustment mechanism 100 is non-circular, and specifically is elliptical, in contrast to the circular orifice in the previously described embodiment.

Applicant has found that compressor operating range (between the choke line at high flow rates and the surge line at low flow rates) can be widened or expanded by using an inlet-adjustment mechanism such as the type of mechanism described herein. The mechanism is effective to shift the surge line to lower flow rates, thereby expanding the useful operating range. Additionally, the compressor efficiency at what would be near-surge operating conditions (typically low flow rate and moderate to high pressure ratio), for a compressor without an inlet-adjustment mechanism, can be improved by using the inlet-adjustment mechanism to restrict the orifice going into the compressor. However, Applicant has found that the gain in efficiency can be partially or completely lost if the inlet-adjustment mechanism is not designed properly. Applicant has found that the parameters described herein are important in designing the inlet-adjustment mechanism so as to provide the greatest benefit in terms of range extension and efficiency improvement at near-surge conditions.

Many modifications and other embodiments of the inventions set forth herein will come to mind to one skilled in the art to which these inventions pertain having the benefit of the teachings presented in the foregoing descriptions and the associated drawings. For example, although the illustrated embodiment employs three blades **102,** the invention is not limited to any particular number of blades. The invention can be practiced with as few as two blades, or as many as 12 blades or more. Therefore, it is to be understood that the inventions are not to be limited to the specific embodiments disclosed and that modifications and other embodiments are intended to be included within the scope of the appended claims. Although specific terms are employed herein, they are used in a generic and descriptive sense only and not for purposes of limitation.

## Claims

1.   A turbocharger, comprising:

   a turbine housing and a turbine wheel mounted in the turbine housing and connected to a rotatable shaft for rotation therewith, the turbine housing receiving exhaust gas and supplying the exhaust gas to the turbine wheel;
   a centrifugal compressor assembly comprising a compressor housing and a compressor wheel mounted in the compressor housing and connected to the rotatable shaft for rotation therewith, the compressor wheel having blades and defining an inducer portion and an exducer portion, the compressor housing having an air inlet wall defining an air inlet for leading air generally axially into the compressor wheel, the air inlet at the inducer portion having a diameter $F$, the compressor housing further defining a diffuser receiving compressed air from the exducer portion and diffusing and delivering the compressed air into a volute defined by the compressor housing, the exducer portion having a diameter $D$; and

a compressor inlet-adjustment mechanism disposed in the air inlet of the compressor housing and adjustable between an open position and a closed position, the inlet-adjustment mechanism comprising a plurality of blades disposed about the air inlet, the blades collectively circumscribing an orifice delimited by the blades, the blades being movable radially inwardly through a slot in the air inlet wall so as to adjust a flow area $AR$ circumscribed by the orifice, wherein $AR_c$ denotes the minimum value of $AR$ when the inlet-adjustment mechanism is adjusted to the closed position;

wherein $L$ is an axial distance between a leading edge of the inducer portion and a location where the flow area $AR$ of the orifice is a minimum, wherein the inlet-adjustment mechanism is configured such that $0.28*\pi*(F/2)^2 < AR_c < 0.95*\pi*(F/2)^2$, and

wherein $L \leq 0.4*D$.

2. The turbocharger of claim 1, wherein $0.28*\pi*(F/2)^2 < AR_c < 0.90*\pi*(F/2)^2$.

3. The turbocharger of claim 1, wherein $0.28*\pi*(F/2)^2 < AR_c < 0.85*\pi*(F/2)^2$.

4. The turbocharger of claim 1, wherein $L \geq G$, where $G$ is an axial clearance between the exducer portion of the compressor wheel and the compressor housing.

5. The turbocharger of claim 1, wherein each of the blades has an arcuate shape.

6. The turbocharger of claim 5, wherein each of the blades is pivotable about a pivot pin, and the blades are engaged with a rotatable unison ring that surrounds the orifice, rotation of the unison ring in one direction about an axis thereof causing the blades to pivot to the closed position of the inlet-adjustment mechanism, rotation of the unison ring in an opposite direction causing the blades to pivot to the open position.

7. The turbocharger of claim 1, wherein the orifice in the closed position of the inlet-adjustment mechanism is circular.

8. The turbocharger of claim 1, wherein the orifice in the closed position of the inlet-adjustment mechanism is non-circular.

9. The turbocharger of claim 8, wherein the orifice in the closed position of the inlet-adjustment mechanism is elliptical.

10. A turbocharger, comprising:

a turbine housing and a turbine wheel mounted in the turbine housing and connected to a rotatable shaft for rotation therewith, the turbine housing receiving exhaust gas and supplying the exhaust gas to the turbine wheel;

a centrifugal compressor assembly comprising a compressor housing and a compressor wheel mounted in the compressor housing and connected to the rotatable shaft for rotation therewith, the compressor wheel having blades and defining an inducer portion and an exducer portion, the compressor housing having an air inlet wall defining an air inlet for leading air generally axially into the compressor wheel, the air inlet at the inducer portion having a diameter $F$, the compressor housing further defining a diffuser receiving compressed air from the exducer portion and diffusing and delivering the compressed air into a volute defined by the compressor housing, the exducer portion having a diameter $D$; and

a compressor inlet-adjustment mechanism disposed in the air inlet of the compressor housing and adjustable between an open position and a closed position, the inlet-adjustment mechanism comprising a plurality of arcuate blades disposed about the air inlet, the blades collectively circumscribing an orifice delimited by the blades, the blades being movable radially inwardly through a slot in the air inlet wall so as to adjust a flow area $AR$ circumscribed by the orifice, wherein $AR_c$ denotes the minimum value of $AR$ when the inlet-adjustment mechanism is adjusted to the closed position;

wherein $L$ is an axial distance between a leading edge of the inducer portion and a location where the flow area $AR$ of the orifice is a minimum, wherein the inlet-adjustment mechanism is configured such that $0.28*\pi*(F/2)^2 < AR_c < 0.85*\pi*(F/2)^2$, and

wherein $G \leq L \leq 0.4*D$, where $G$ is an axial clearance between the exducer portion of the compressor wheel and the compressor housing.

11. The turbocharger of claim 10, wherein the orifice in the closed position of the inlet-adjustment mechanism is non-circular.

12. The turbocharger of claim 11, wherein the orifice in the closed position of the inlet-adjustment mechanism is elliptical.

13. The turbocharger of claim 10, wherein $0.05*D \leq L \leq 0.15*D$.

FIG. 1

FIG. 2

FIG. 3

FIG. 4

FIG. 5

FIG. 6

FIG. 8

FIG. 7

FIG. 9

EP 3 495 665 A1

FIG. 10

15

FIG. 11

FIG. 12

Europäisches
Patentamt

European
Patent Office

Office européen
des brevets

# EUROPEAN SEARCH REPORT

Application Number

EP 18 21 0489

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 236 077 A1 (HONEYWELL INT INC [US]) 25 October 2017 (2017-10-25) * paragraphs [0024], [0025], [0035] * * figures 2, 5, 7-9 * | 1-13 | INV.<br>F04D27/02<br>F02B37/22<br>F04D29/46<br>F16K3/03 |
| A | EP 2 083 173 A1 (GM GLOBAL TECH OPERATIONS INC [US]) 29 July 2009 (2009-07-29) * paragraph [0020] * * figures 1-12 * | 1-13 | ADD.<br>F02B37/12 |
| A | US 4 122 668 A (CHOU CHENG-CHIEN ET AL) 31 October 1978 (1978-10-31) * figures 1-5 * | 1-13 | |
| A | EP 3 018 356 A1 (HONEYWELL INT INC [US]) 11 May 2016 (2016-05-11) * paragraph [0032] * * figures 1-4 * | 1-13 | |

TECHNICAL FIELDS
SEARCHED (IPC)

F02B
F02N

The present search report has been drawn up for all claims

| Place of search | Date of completion of the search | Examiner |
|---|---|---|
| The Hague | 23 April 2019 | De Tobel, David |

## ANNEX TO THE EUROPEAN SEARCH REPORT
## ON EUROPEAN PATENT APPLICATION NO.

EP 18 21 0489

This annex lists the patent family members relating to the patent documents cited in the above-mentioned European search report.
The members are as contained in the European Patent Office EDP file on
The European Patent Office is in no way liable for these particulars which are merely given for the purpose of information.

23-04-2019

| Patent document cited in search report | | | Publication date | Patent family member(s) | | | Publication date |
|---|---|---|---|---|---|---|---|
| EP 3236077 | | A1 | 25-10-2017 | CN<br>EP<br>US | 107304709<br>3236077<br>2017298953 | A<br>A1<br>A1 | 31-10-2017<br>25-10-2017<br>19-10-2017 |
| EP 2083173 | | A1 | 29-07-2009 | NONE | | | |
| US 4122668 | | A | 31-10-1978 | NONE | | | |
| EP 3018356 | | A1 | 11-05-2016 | CN<br>EP<br>US | 105626239<br>3018356<br>2016131145 | A<br>A1<br>A1 | 01-06-2016<br>11-05-2016<br>12-05-2016 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 15446054 B

- US 62324488 A